(19)

Europäisches
Patentamt
European
Patent Office
Office européen
des brevets

(11) **EP 3 805 837 B1**

(12) **EUROPEAN PATENT SPECIFICATION**

(45) Date of publication and mention
of the grant of the patent:
**10.01.2024 Bulletin 2024/02**

(21) Application number: **19202479.2**

(22) Date of filing: **10.10.2019**

(51) International Patent Classification (IPC):
***G02B 21/02*** *(2006.01)*        ***G02B 27/00*** *(2006.01)*

(52) Cooperative Patent Classification (CPC):
**G02B 21/02; G02B 27/0068**

(54) **MICROSCOPE SYSTEM COMPRISING A WAVE FRONT MANIPULATOR ELEMENT**

MIKROSKOPISCHES SYSTEM MIT EINEM WELLENFRONT-MANIPULATOR-ELEMENT

SYSTÈME DE MICROSCOPE COMPRENANT UN ÉLÉMENT MANIPULATEUR DE FRONT D'ONDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.04.2021 Bulletin 2021/15**

(73) Proprietor: **Leica Microsystems CMS GmbH
35578 Wetzlar (DE)**

(72) Inventor: **Dr. DEISSLER, Benjamin
35510 Butzbach (DE)**

(74) Representative: **Schaumburg und Partner
Patentanwälte mbB
Mauerkircherstraße 31
81679 München (DE)**

(56) References cited:
**DE-U1-202016 008 115      US-A- 4 309 602
US-A1- 2015 116 812**

• **SEYEDEH MAHSA KAMALI ET AL: "Abstract",
NANOPHOTONICS, vol. 7, no. 6, 18 May 2018
(2018-05-18), pages 1041-1068, XP055685001,
DOI: 10.1515/nanoph-2017-0129**

• **DANIEL E MILKIE ET AL:
"Pupil-segmentation-based adaptive optical
microscopy with full-pupil illumination", OPTICS
LETTERS, OPTICAL SOCIETY OF AMERICA, US,
vol. 36, no. 21, 1 November 2011 (2011-11-01),
pages 4206-4208, XP001570748, ISSN: 0146-9592,
DOI: 10.1364/OL.36.004206 [retrieved on
2011-10-25]**

• **NA JI ET AL: "Adaptive optics via pupil
segmentation for high-resolution imaging in
biological tissues", NATURE METHODS, vol. 7,
no. 2, 1 February 2010 (2010-02-01), pages
141-147, XP055138052, ISSN: 1548-7091, DOI:
10.1038/nmeth.1411**

• **GONSALVES R A ED - DRIGGERS RONALD G:
"Phase retrieval and diversity in adaptive optics",
OPTICAL ENGINEERING, SOC. OF
PHOTO-OPTICAL INSTRUMENTATION
ENGINEERS, BELLINGHAM, vol. 21, no. 5, 1
September 1982 (1982-09-01), pages 829-832,
XP008105528, ISSN: 0091-3286**

• **Dennis Dolkens: "A Deployable Telescope for
Sub-Meter Resolutions from MicroSatellite
Platforms", , 29 January 2015 (2015-01-29),
XP055713438,
http://resolver.tudelft.nl/uuid:8f73b31c-4
306-4b44-9937-3b4d23a4a53f Retrieved from the
Internet:
URL:https://repository.tudelft.nl/islandor
a/object/uuid:8f73b31c-4306-4b44-9937-3b4d
23a4a53f/datastream/OBJ/download [retrieved
on 2020-07-09]**

**EP 3 805 837 B1**

**Description**

Technical field

The present invention relates to microscope comprising an objective, comprising a lens barrel and a lens system included in the lens barrel, said lens system defining an objective pupil within the lens barrel. Further, the present invention relates to a method for controlling a phase of light in a microscope.

Background

Optical components in a microscope are designed in accordance with certain assumptions about the sample to be imaged. Such assumptions may comprise e.g. the thickness of a cover glass, refractive index and homogeneity of the sample, etc. Deviations from an ideal state defined by these assumptions result in optical aberrations.

Simple spherical aberration can be compensated by a mechanical correction unit, e.g. a so-called correction collar. For more complicated aberrations, which may occur when imaging is performed through scattering tissue, adaptive optical elements can be used. Thus, a wave front manipulator is used to shape the optical wave front of the light in such a way that aberrations are optimally compensated. Common wave front manipulators are e.g. deformable mirrors or spatial light modulators (SLM). Common wave front manipulators cannot be easily integrated into an optical beam path of the microscope. Deformable mirrors are reflective and therefore require considerable adjustment of the optical beam path in order to integrate the mirrors into conventional microscopes. SLMs are often reflective likewise. Whereas also transmissive SLMs exist, these transmissive elements depend on polarization. This has the disadvantage that when using ordinary unpolarized light, e.g. fluorescent light, 50 % of the amount of light is already lost due to polarization dependence. There are also adaptive membrane lenses which are transmissive as disclosed e.g. in Bonora el al., "Wavefront correction and high-resolution in vivo OCT imaging with an objective integrated multi-actuator adaptive lens", Optics Express 23, 21931-21941 (2015).

The pupil plane of an objective is generally located inside the lens barrel of the objective. Free space inside the objective is limited as the interior of the objective is filled with lenses. Due to their design, adaptive optical elements such as membrane lenses or transmissive SLMs can therefore not be installed directly in the pupil plane of the objective. Accordingly, it is necessary to create a pupil image at a location outside of the objective where the adaptive optical element is to be positioned in order to achieve proper correction. This significantly increases the installation space due to additional optical elements and results in increased costs.

Recently, phase-shifting metamaterials have been developed which are based on thermo-optical or dielectric effects as disclosed e.g. in Forouzmand et al., "Tunable all-dielectric metasurface for phase modulation of the reflected and transmitted light via permittivity tuning of indium tin oxide", Nanophotonics 8, 415 (2019). Using these metamaterials, the phase shift in an optical element or a range thereof can be adjusted by correspondingly controlling an electric current or an electric voltage applied to the metamaterial.

DE 20 2016 008 115 U1 discloses an assembly for microscopy having two objectives each comprising a lens barrel containing a lens system and small adaptive elements and a control unit for controlling said adaptive elements.

Regarding the state of the art, reference is also made to the review article Kamali et al., "A review of dielectric optical metasurfaces for wavefront control", Nanophotonics, Volume 7, Issue 6, 1041 (2018) discussing the use of dielectric metasurfaces as means for wavefront control.

Further reference is made to Ji et al., "Adaptive optics via pupil segmentation for high-resolution imaging in biological tissues", Nat Methods 7, 141-147 (2010), Golsalves, "Phase retrieval and diversity in adaptive optics", Optical Engineering, 21(5), 215829 (1982), and US 4 309 602 A, which disclose conventional adaptive optics setups wherein the wave front manipulator ele-ments are arranged outside an objective.

Gonsalves et al.: "Phase retrieval and diversity in adaptive optics", Optical Engineering, Soc. Of Photo-Optical Instrumentation Engineers, Vol. 21, No. 5 (1982), Pages 829-832, provides valuable insights about two-defoci phase retrieval.

Summary

It is an object of the present invention to provide a microscope and a method which allow to effectively control a phase of light with low constructive effort.

The aforementioned objective is achieved by the subject-matter of the independent claims. Advantageous embodiments are defined in the dependent claims and the following description.

According to an embodiment, a microscope according to claim 1 featuring an objective with a wave front manipulator element is provided.

As the wave front manipulator element is located in the pupil of the objective, there is no need to create a pupil image outside the lens barrel in contrast to systems which are known from prior art. Accordingly, the optical design can be simplified reducing costs and saving space.

The wave front manipulator element is formed by a structure disposed on a surface of an optical element included in the lens system. Such an optical element may be comprised by a lens or any other type of refractive or diffractive element which is suitable to be installed in a plane inside the lens barrel where a pupil of the objective is located. Further, the optical element may also be formed by an element having no optical power as e.g. a glass plate.

According to an advantageous embodiment, the optical element is formed by a cemented element having a cemented surface on which the afore-mentioned structure is disposed. Such a cemented element may be formed by a cemented lens including two or more lens elements which are cemented to each other by means of one or more cemented surfaces defining the interface between two adjacent lens elements. Alternatively, the cemented element may be formed by a cemented plate formed by two or more plates which are cemented to each other by means of one or more cemented surfaces defining the interface between two adjacent plates. Specifically, the plates may be formed by plane parallel plates, i.e. by two or more flat plates arranged parallel to each other.

This embodiment has the advantage that the wave front manipulator element can be implemented in an existing optical system without fundamentally changing a given lens design. Thus, many conventional objectives comprise a cemented surface in a pupil plane inside the lens barrel or in an immediate vicinity thereof. For instance, such a cemented surface may be included in a pair of lenses forming an achromatic lens unit which is used for correcting chromatic aberrations. According to the present embodiment, such a cemented surface may also be used to apply a spatially structured phase-shifting material which forms the wave front manipulator element. Accordingly, the wave front manipulator element can be directly located in the pupil plane of the objective without requiring any additional pupil imaging, which enables a compact lens design. Furthermore, the shape and the number of components forming the wave front manipulator element can advantageously be adapted to specific objective parameters. For instance, an objective with a small pupil generally requires fewer phase-shifting components forming the wave front manipulator element compared to an objective with a larger pupil.

Preferably, the structure forming the wave front manipulator element is made from a material which is electro-optically or thermo-optically tunable to vary the phase of light. Such a material may be a metamaterial having a thermo-optical or electro-optical phase-shifting effect as mentioned above. Such a metamaterial is configured to be applied also on curved surfaces so that the structure defining the wave front manipulator element may be formed on a surface of any shape, in particular on a curved surface of a lens element.

Preferably, the wave front manipulator element comprises a plurality of segments spatially distributed across the objective pupil, each segment being individually controllable to vary the phase of light passing through the segment. In such a way, the wave front of light transmitting the wave front manipulator element can be influenced with high spatial resolution. The spatial distribution of the manipulator elements can be defined according to the desired wave front manipulation to be performed.

Preferably, each segment may have a rectangular shape. According to this embodiment, the plurality of segments may intrinsically form a rectangular, pixel-like array, the total effective area thereof being limited by the outer edge of the objective pupil.

Alternatively, each segment may have an annular shape. Thus, the plurality of segments form a concentric, radially symmetric array of ring portions which may specifically be used for correcting a spherical aberration or for deliberately introducing a radially symmetric aberration, e.g. a defocus.

Preferably, each segment is configured to be electrically powered by two electrical lines.

The microscope comprises a processor configured to control the wave front manipulator element for varying the phase of light across the objective pupil.

The processor is configured to cause the wave front manipulator element to correct an aberration and/or to deliberately introduce an aberration. Accordingly, in addition to a correction of an aberration, e.g. a spherical aberration, the wave front manipulator element can also be used to purposely introduce an aberration, for instance when using the objective for a quantitative phase imaging.

The processor is configured to cause acquisition of a first image with a first image defocus and to cause acquisition of a second image with a second image defocus. The processor may further be configured to process the first and second images for obtaining phase information. Such an embodiment is based on the reasoning that a defocus is to be considered as a rotationally symmetric wave front aberration in the pupil. Such an aberration can be easily introduced by the wave front manipulator element. For this, a first image is captured with a first defocus, and then a second image is captured with a second defocus. Subsequently, a resulting image is calculated from the first and second images, and the phase information is calculated from the afore-mentioned resulting image.

Specifically, the resulting image may be calculated in form of a difference image by subtracting one of the first and second images from the other image.

Further, the processor is configured to calculate a phase transfer function. This may be based on an illumination intensity distribution and a pupil function wherein said pupil function is associated with an optical imaging system including the lens system of the objective. Subsequently, the processor calculates the phase information based on the phase transfer function.

According to another aspect, a method for controlling a phase of light in a microscope is provided. The method comprises the steps recited in claim 11.

Short Description of the Figures

Hereinafter, preferred embodiments are described with reference to the drawings, in which:

Figure 1 is a diagram showing a microscope including an objective which comprises a wave front manipulator element according to an embodiment;

Figure 2 is a diagram showing the objective included in the microscope of Figure 1;

Figure 3 is a diagram showing the wave front manipulator element according to a specific embodiment;

Figure 4 is a diagram showing the wave front manipulator element according to another embodiment;

Figure 5 is a diagram illustrating a configuration for supplying individual segments of the wave front manipulator element with electrical power; and

Figure 6 shows a flow diagram illustrating a method for obtaining phase information from a sample by means of the wave front manipulator element.

Detailed Description

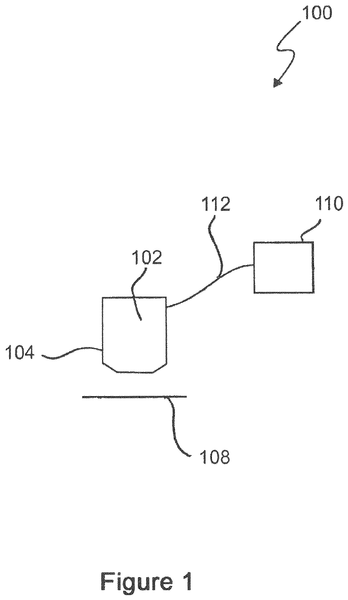

A microscope 100 according to an embodiment is shown in the diagram of Figure 1, wherein only those components of the microscope 100 are shown which are helpful for understanding the embodiment.

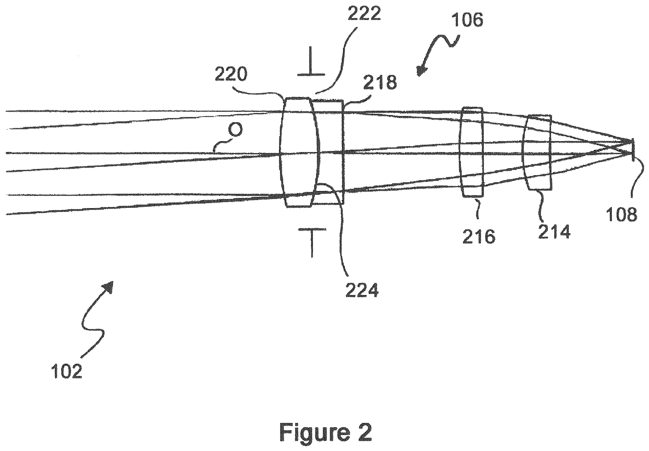

The microscope 100 comprises an objective 102 having a lens barrel 104. The lens barrel 104 includes a lens system 106 shown in Figure 2. The objective 102 faces a sample (not shown) which is located in an object plane 108 being a focal plane 108 of the objective 102. The lens system 106 of the objective 102 is configured to form an optical image of the sample located in the object plane 108 on an image plane in which an image sensor e.g. a CCD or CMOS camera is positioned (not shown).

The microscope 100 further comprises a processor 110 which may be configured to control the objective 102 as described below. For this, the processor 110 is connected to the objective 102 via a cable 112.

As shown in Figure 2, the lens system 106 of the objective 102 may comprise a plurality of lens elements 214, 216, 218, 220 which are provided in this order from the object plane 108. According to the specific embodiment shown in Figure 2, the lens elements 218, 220 are cemented to each other to form a cemented lens which may serve as an achromatic lens unit. Accordingly, the cemented lens 218, 220 comprises a cemented surface 224 forming an interface between the lens elements 218, 220. The cemented surface 224 is located along an optical axis O of the lens system 106 at a position of an objective pupil 222. More concretely, the cemented surface 224 is disposed on a pupil plane or at least in the immediate vicinity thereof, which intersects an optical beam path within the lens system 106 in a direction perpendicular to the optical axis O. As can be seen from Figure 2, the objective pupil 222 is located inside the lens system 106, i.e. inside the lens tube 104.

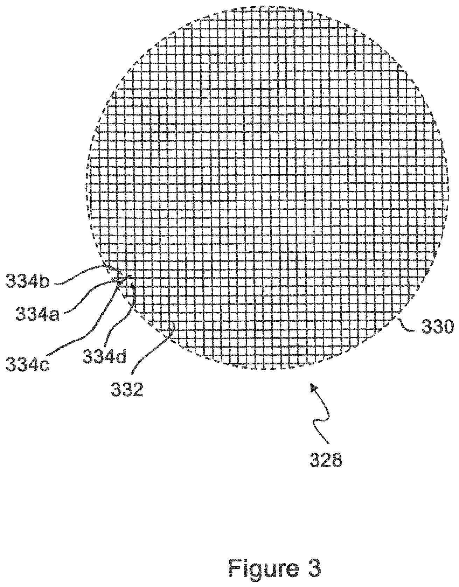

The cemented surface 224 may be utilized to form a structure 328 thereon as illustrated in the diagram of Figure 3. Figure 3 shows the objective pupil 222 as viewed in optical axis direction. Specifically, a circular outer edge 330 of the objective pupil 222 is indicated as a broken line in Figure 3. The structure 328 disposed on the cemented surface 224 is configured to form a wave front manipulator element 332 which is capable to shape an optical wave front of light transmitting the lens system 106 from the object plane 108 to the image plane. For this, the structure 328 may be made from a material which is electro-optically or thermo-optically tunable to vary the phase of light transmitting therethrough. Preferably, a phase-shifting metamaterial may be applied to the cemented surface 224 in order to control the phase of light as desired.

According to the specific embodiment illustrated in Figure 3, the wave front manipulator element 332 formed by the structure 328 comprises a plurality of segments, four segments thereof being designated by 334a, 334b, 334c and 334d. Each segment 334a to 334d has a rectangular shape so that the plurality of segments intrinsically form a rectangular array having a circular outer edge corresponding to the circular shape of the cemented surface 224.

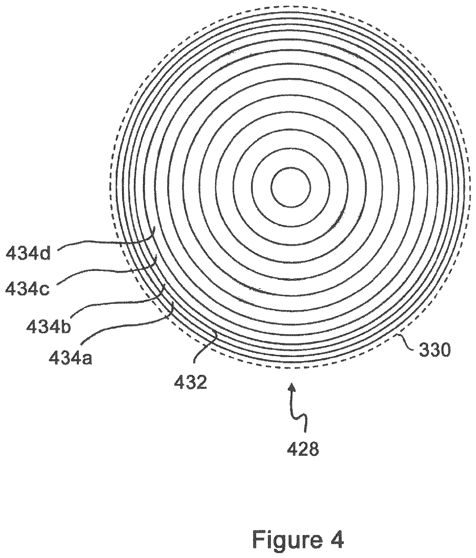

Needless to say that the configuration shown in Figure 3 shall be understood merely as an example. Another exemplary configuration is illustrated in Figure 4 showing a modified structure 428 applied on the cemented surface 224.

According to the embodiment shown in Figure 4, the structure 428 forms a wave front manipulator element 432 which is comprised of a plurality of concentric, annular segments, four segments thereof being designated by 434a, 434b, 434c, 434d. Accordingly, each segment of the wave front manipulator element 432 forms a ring-like element around the center of the structure 428 coinciding with the optical axis O of the lens system 106.

The segments which form the wave front manipulator 332 of Figure 3 or the wave front manipulator 432 of Figure 4 are controlled by the processor 110 in order to manipulate the wave front of the transmitting light in accordance with a specific task. Specifically, the segments of the wave front manipulator 332, 432, which are spatially distributed across the objective pupil 222, are individually controlled to vary the phase of light passing through the specific segment. Accordingly, each segment of the wave front manipulator element 332, 432 is electrically connected to the processor 110 for implementing the individual wave front manipulation across the objective pupil 222.

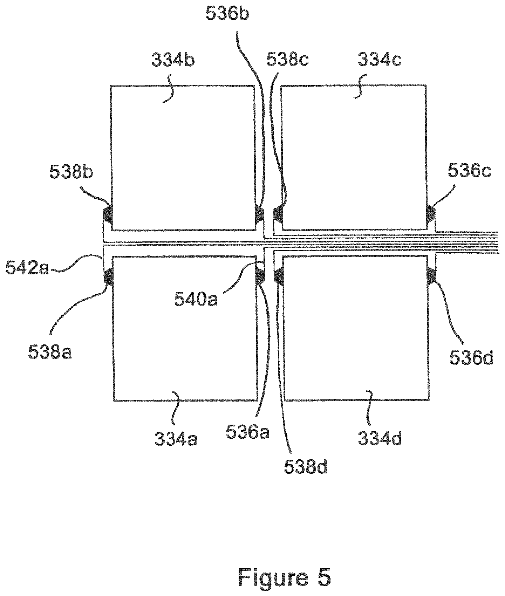

An embodiment configured to individually control each segment of the wave front manipulator element is illustrated in Figure 5. The embodiment shown in Figure 5 refers to the specific configuration of Figure 3 comprising the array of rectangular segments 334a to 334d. Needless to say that a corresponding configuration may be used for controlling the wave front manipulator element 432 of Figure 4.

As shown in Figure 5, each segment 334a to 334d comprises two terminals 536a, 538a to 536d, 538d, respectively. Each of these terminals is connected to an electrical line, wherein for convenience of illustration only the electrical lines associated with the segment 334a are designated by reference signs 540a, 542a in Figure 5. Accordingly, each segment 334a to 334d is electrically powered by the two electrical lines associated therewith under control of the processor 110. The electrical lines shown in Figure 5 may be included in the cable 112 interconnecting the processor 110 and the objective 102 with each other (see Figure 1). Furthermore, the electrical lines may extend between the pixel-like segments 334a to 334d. Alternatively, the electrical lines may be arranged on a plane lying behind or in front of the segments 334a to 334d in optical axis direction.

As a further alternative, the processor 110 may control a current or voltage source close to the wave front manipulator element via a bus system. In this case, the cable 112 may be used for the transmission of commands via the bus system.

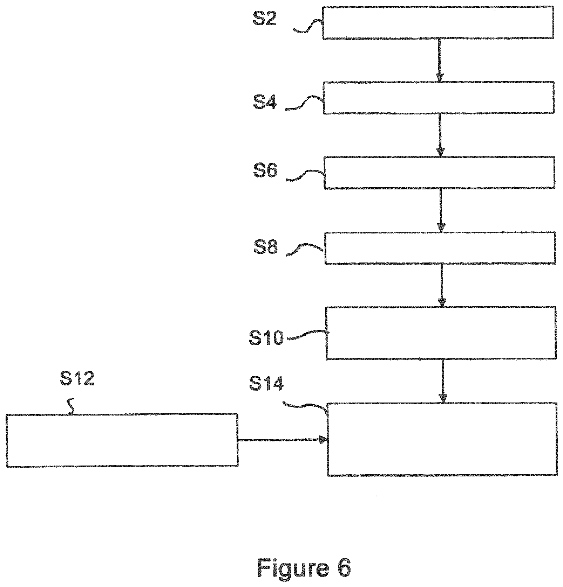

The wave front manipulator element 332, 432 shown in Figures 3 and 4, respectively, may be used for correcting aberrations occurring in the lens system 106 of the objective 102. For instance, the wave front manipulator element 432 of Figure 4 is suitable for correcting a spherical aberration due to its radially symmetric configuration. However, the wave front manipulator element 332, 432 may also be used for deliberating introducing an aberration, in particular when using the microscope 100 for obtaining phase information from the sample. Figure 6 shows a flow diagram illustrating an example of a method for performing quantitative phase imaging.

In step S2, the processor 110 controls the wave front manipulator element 332, 432 to introduce a spherical aberration corresponding to a defocus +d. Subsequently, in step S4 a first image is captured in accordance with the defocus +d.

In step S6, the processor 110 controls the wave front manipulator element 332, 432 to introduce a spherical aberration corresponding to a defocus -d. Then, in step S8 a second image is captured in accordance with the defocus -d.

The defoci adjusted in steps S4 and S26 are equal in absolute values but have opposite signs. The respective defocus is represented by a rotationally symmetric wave front aberration in the objective pupil 222 according following relation (1):

$$(1) \qquad W(\rho) = \frac{d}{\lambda}\sqrt{1 - (\text{NA} \cdot \rho)^2}$$

wherein d designates the absolute value of the defocus, $\lambda$ designates the wavelength, NA designates the numerical aperture of the optical imaging system, and $\rho$ designates the normalized radial coordinate in the objective pupil 222.

In step S10, a resulting difference image is calculated by subtracting the first and second images from each other.

In step S12, a phase transfer function is calculated based on an illumination intensity distribution and a pupil function associated with an optical imaging system of the microscope 100 including the lens system 106 of the objective 102.

In step S14, a phase distribution $\phi$ is calculated based on the phase transfer function determined in step S12 and the difference Image determined in step S10. The phase distribution $\phi$ may be calculated by means of a Wiener filter according to relation (2):

$$\phi(u) = \frac{PTF^*(u)}{|PTF(u)|^2 + \alpha} I_{dif}(u)$$

In relation (2) PTF designates the phase transfer function, $I_{dif}$ designates an intensity representing the difference image, u designates a coordinate, and $\alpha$ designates a regularization parameter.

The phase distribution $\phi$ determined according to the method of Figure 6 may be utilized in phase-contrast microscopy for imaging biological samples which cannot be examined effectively by means of bright-field microscopy.

The invention shall not be limited to the embodiments described above. For instance, according to the embodiment shown in Figure 2, the optical element comprising the wave front manipulator element is a refractive lens. However, the optical element onto which the wave front manipulator element is applied shall not be restricted to a refractive lens. Rather, it may also be formed by any other type of optical element included in the lens system, e.g. a plane parallel plate.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

List of Reference Signs

| | |
|---|---|
| 100 | microscope |
| 102 | objective |
| 104 | lens barrel |
| 106 | lens system |
| 108 | object plane |
| 110 | processor |
| 112 | cable |
| 214 | lens element |
| 216 | lens element |
| 218 | lens element |
| 220 | lens element |
| 224 | cemented surface |
| 328 | structure |
| 330 | outer edge of objective pupil |
| 332 | wave front manipulator element |
| 334 | segment |
| 428 | structure |
| 432 | wave front manipulator element |
| 434 | segment |
| 536 | terminal |
| 538 | terminal |
| 540 | electrical line |
| 542 | electrical line |

**Claims**

1. A microscope (100), comprising:

an objective (102) comprising
a lens barrel (104) and a lens system (106) included in said lens barrel (104), said lens system (106) defining an objective pupil (222) within said lens barrel (104),
wherein said lens system (106) comprises a wave front manipulator element (332, 432) located in said objective pupil (222), said wave front manipulator element (332, 432) being controllable to vary a phase of light across said objective pupil (222,
**characterized in that** said wave front manipulator element (332, 432) is formed by a structure (328, 428) disposed on a surface of an optical element (218, 220) included in said lens system (106),
the microscope (100) further comprising a processor (110) configured to control said wave front manipulator element (332, 432) for varying the phase of light across the objective pupil (222),

said processor (110) is configured to cause acquisition of a first image with a first image defocus and to cause acquisition of a second image with a second image defocus, and

said processor (110) is further configured to process said first and second images for obtaining phase information.

2. The microscope (100) according to claim 1, wherein said optical element is formed by a cemented element (218, 220) having a cemented surface (224) on which said structure (328, 428) is disposed.

3. The microscope (100) according claim 2, wherein said structure (328, 428) is formed by a material which is electro-optically or thermo-optically tunable to vary the phase of light.

4. The microscope (100) according to any one of the preceding claims, wherein said wave front manipulator element (332, 432) comprises a plurality of segments (334, 434) spatially distributed across said objective pupil (222), each segment (334, 434) being individually controllable to vary the phase of light passing through said segment (334, 434).

5. The microscope (100) according to claim 4, wherein each segment (334) has a rectangular shape.

6. The microscope (100) according to claim 4, wherein each segment (434) has an annular shape.

7. The microscope (100) according to any one of the claims 4 to 6, wherein each segment (70) is configured to be electrically powered by two electrical lines (540, 542).

8. The microscope (100) according to any one of the preceding claims, wherein said processor (110) is configured to cause said wave front manipulator element (332, 432) to correct an aberration and/or to deliberately introduce an aberration.

9. The microscope (100) according any one of the preceding claims, wherein said processor (110) is configured to calculate a resulting image from said first and second images and to calculate said phase information from said resulting image.

10. The microscope (100) according claim 9, wherein said processor (110) is configured to calculate a phase transfer function based on an illumination intensity distribution and a pupil function being associated with an optical imaging system of said microscope including said lens system (106) of said objective (102), and

said processor (110) is configured to calculate said phase information based on said phase transfer function.

11. A method for controlling a phase of light in a microscope (100), comprising the following steps:

providing an objective (102) comprising a lens barrel (104) and a lens system (106) included in said lens barrel (104), said lens system (106) defining an objective pupil (222) within said lens barrel (104) and said lens system (106) comprising a wave front manipulator element (332, 432) located in said objective pupil (222),

wherein said wave front manipulator element (332, 432) is formed by a structure (328, 428) disposed on a surface of an optical element (218, 220) included in said lens system (106),

controlling said wave front manipulator element (332, 432) to vary the phase of light across said objective pupil (222),

acquiring a first image with a first image defocus,

acquiring a second image with a second image defocus, and

processing said first and second images for obtaining phase information.

**Patentansprüche**

1. Mikroskop (100), umfassend

ein Objektiv (102) mit

einem Linsentubus (104) und einem Linsensystem (106), das in dem Linsentubus (104) enthalten ist, wobei das Linsensystem (106) eine Objektivpupille (222) innerhalb des Linsentubus (104) definiert,

wobei das Linsensystem (106) ein Wellenfront-Manipulatorelement (332, 432) umfasst, das in der Objektivpupille (222) angeordnet ist, wobei das Wellenfront-Manipulatorelement (332, 432) steuerbar ist, um eine Phase des Lichts durch die Objektivpupille (222) zu verändern,

**dadurch gekennzeichnet, dass** das Wellenfront-Manipulatorelement (332, 432) durch eine Struktur (328, 428) gebildet ist, die auf einer Oberfläche eines optischen Elements (218, 220) angeordnet ist, das in dem Linsensystem (106) enthalten ist,

das Mikroskop (100) ferner einen Prozessor (110) umfasst, der ausgebildet ist, das Wellenfront-Manipulatorelement (332, 432) zum Variieren der Phase des Lichts durch die Objektivpupille (222) zu steuern,

der Prozessor (110) ausgebildet ist, die Erfassung eines ersten Bildes mit einem ersten Bilddefokus und die Erfassung eines zweiten Bildes mit einem zweiten Bilddefokus zu veranlassen, und

der Prozessor (110) ferner ausgebildet ist, das erste und das zweite Bild zu verarbeiten, um Phaseninformationen zu erhalten.

2. Mikroskop (100) nach Anspruch 1, wobei das optische Element durch ein zementiertes Element (218, 220) mit einer zementierten Oberfläche (224) gebildet ist, auf der die Struktur (328, 428) angeordnet ist.

3. Mikroskop (100) nach Anspruch 2, wobei die Struktur (328, 428) aus einem Material gebildet ist, das elektrooptisch oder thermooptisch abstimmbar ist, um die Phase des Lichts zu verändern.

4. Mikroskop (100) nach einem der vorhergehenden Ansprüche, wobei das Wellenfront-Manipulatorelement (332, 432) eine Vielzahl von Segmenten (334, 434) umfasst, die räumlich über die Objektivpupille (222) verteilt sind, wobei jedes Segment (334, 434) einzeln steuerbar ist, um die Phase des durch das Segment (334, 434) hindurchtretenden Lichts zu verändern.

5. Mikroskop (100) nach Anspruch 4, wobei jedes Segment (334) eine rechteckige Form hat.

6. Mikroskop (100) nach Anspruch 4, wobei jedes Segment (434) eine Ringform hat.

7. Mikroskop (100) nach einem der Ansprüche 4 bis 6, wobei jedes Segment (70) ausgebildet ist, über zwei elektrische Leitungen (540, 542) mit Strom versorgt zu werden.

8. Mikroskop (100) nach einem der vorhergehenden Ansprüche, wobei der Prozessor (110) ausgebildet ist, das Wellenfront-Manipulatorelement (332, 432) zu veranlassen, eine Aberration zu korrigieren und/oder absichtlich eine Aberration einzuführen.

9. Mikroskop (100) nach einem der vorhergehenden Ansprüche, wobei der Prozessor (110) ausgebildet ist, ein resultierendes Bild aus dem ersten und zweiten Bild zu berechnen und die Phaseninformation aus dem resultierenden Bild zu berechnen.

10. Mikroskop (100) nach Anspruch 9, wobei der Prozessor (110) ausgebildet ist, eine Phasentransferfunktion auf der Grundlage einer Beleuchtungsintensitätsverteilung und einer Pupillenfunktion zu berechnen, die mit einem optischen Abbildungssystem des Mikroskops, das das Linsensystem (106) des Objektivs (102) enthält, verbunden ist, und der Prozessor (110) ausgebildet ist, die Phaseninformation auf der Grundlage der Phasenübertragungsfunktion zu berechnen.

11. Verfahren zur Steuerung einer Lichtphase in einem Mikroskop (100), das die folgenden Schritte umfasst:

Bereitstellen eines Objektivs (102) mit einem Linsentubus (104) und einem Linsensystem (106), das in dem Linsentubus (104) enthalten ist, wobei das Linsensystem (106) eine Objektivpupille (222) innerhalb des Linsentubus (104) definiert und das Linsensystem (106) ein Wellenfront-Manipulatorelement (332, 432) aufweist, das in der Objektivpupille (222) angeordnet ist,

wobei das Wellenfront-Manipulatorelement (332, 432) durch eine Struktur (328, 428) gebildet ist, die auf einer Oberfläche eines optischen Elements (218, 220) angeordnet ist, das in dem Linsensystem (106) enthalten ist,

Steuerung des Wellenfront-Manipulatorelements (332, 432), um die Phase des Lichts durch die Objektivpupille (222) zu verändern,

Erfassen eines ersten Bildes mit einem ersten Bilddefokus,

Erfassen eines zweiten Bildes mit einem zweiten Bilddefokus, und

Verarbeitung des ersten und zweiten Bildes zur Gewinnung von Phaseninformationen.

**Revendications**

1. Microscope (100), comprenant :

   un objectif (102) comprenant
   un barillet de lentille (104) et un système de lentille (106) contenu dans ledit barillet de lentille (104), ledit système de lentille (106) définissant une pupille d'objectif (222) à l'intérieur dudit barillet de lentille (104),
   dans lequel ledit système de lentille (106) comprend un élément manipulateur de front d'onde (332, 432) situé dans ladite pupille d'objectif (222), ledit élément manipulateur de front d'onde (332, 432) étant contrôlable pour faire varier une phase de lumière d'un bout à l'autre de ladite pupille d'objectif (222),
   **caractérisé en ce que** ledit élément manipulateur de front d'onde (332, 432) est formé par une structure (328, 428) disposée sur une surface d'un élément optique (218, 220) contenu dans ledit système de lentille (106),
   le microscope (100) comprenant en outre un processeur (110) configuré pour contrôler ledit élément manipulateur de front d'onde (332, 432) afin de faire varier la phase de lumière d'un bout à l'autre de la pupille d'objectif (222),
   ledit processeur (110) est configuré pour provoquer l'acquisition d'une première image avec une première défocalisation d'image et pour provoquer l'acquisition d'une deuxième image avec une deuxième défocalisation d'image, et
   ledit processeur (110) est en outre configuré pour traiter lesdites première et deuxième images afin d'obtenir des informations de phase.

2. Microscope (100) selon la revendication 1, dans lequel ledit élément optique est formé par un élément collé (218, 220) ayant une surface collée (224) sur laquelle est disposée ladite structure (328, 428).

3. Microscope (100) selon la revendication 2, dans lequel ladite structure (328, 428) est formée par un matériau qui est ajustable de façon électro-optique ou thermo-optique pour faire varier la phase de lumière.

4. Microscope (100) selon l'une quelconque des revendications précédentes, dans lequel ledit élément manipulateur de front d'onde (332, 432) comprend une pluralité de segments (334, 434) répartis spatialement d'un bout à l'autre de ladite pupille d'objectif (222), chaque segment (334, 434) étant contrôlable individuellement pour faire varier la phase de lumière traversant ledit segment (334, 434).

5. Microscope (100) selon la revendication 4, dans lequel chaque segment (334) a une forme rectangulaire.

6. Microscope (100) selon la revendication 4, dans lequel chaque segment (434) a une forme annulaire.

7. Microscope (100) selon l'une quelconque des revendications 4 à 6, dans lequel chaque segment (70) est configuré pour être alimenté électriquement par deux lignes électriques (540, 542).

8. Microscope (100) selon l'une quelconque des revendications précédentes, dans lequel ledit processeur (110) est configuré pour conduire ledit élément manipulateur de front d'onde (332, 432) à corriger une aberration et/ou à introduire délibérément une aberration.

9. Microscope (100) selon l'une quelconque des revendications précédentes, dans lequel ledit processeur (110) est configuré pour calculer une image résultante à partir desdites première et deuxième images et pour calculer lesdites informations de phase à partir de ladite image résultante.

10. Microscope (100) selon la revendication 9, dans lequel ledit processeur (110) est configuré pour calculer une fonction de transfert de phase en se basant sur une distribution d'intensité d'éclairage et une fonction de pupille associée à un système d'imagerie optique dudit microscope incluant ledit système de lentille (106) dudit objectif (102), et ledit processeur (110) est configuré pour calculer lesdites informations de phase en se basant sur ladite fonction de transfert de phase.

11. Procédé destiné à contrôler une phase de lumière dans un microscope (100), comprenant les étapes suivantes :

    obtention d'un objectif (102) comprenant un barillet de lentille (104) et un système de lentille (106) contenu dans ledit barillet de lentille (104), ledit système de lentille (106) définissant une pupille d'objectif (222) à l'intérieur dudit barillet de lentille (104) et ledit système de lentille (106) comprenant un élément manipulateur de front d'onde (332, 432) situé dans ladite pupille d'objectif (222),

ledit élément manipulateur de front d'onde (332, 432) étant formé par une structure (328, 428) disposée sur une surface d'un élément optique (218, 220) contenu dans ledit système de lentille (106),

contrôle dudit élément manipulateur de front d'onde (332, 432) pour faire varier la phase de lumière d'un bout à l'autre de ladite pupille d'objectif (222),

acquisition d'une première image avec une première défocalisation d'image,

acquisition d'une deuxième image avec une deuxième défocalisation d'image, et

traitement desdites première et deuxième images pour obtenir des informations de phase.

Figure 1

Figure 2

334b

334a

334c    334d

332

330

328

Figure 3

434d

434c

434b

434a

432

330

428

Figure 4

Figure 5

Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 202016008115 U1

- US 4309602 A

**Non-patent literature cited in the description**

- **BONORA.** Wavefront correction and high-resolution in vivo OCT imaging with an objective integrated multi-actuator adaptive lens. *Optics Express,* 2015, vol. 23, 21931-21941
- **FOROUZMAND et al.** Tunable all-dielectric metasurface for phase modulation of the reflected and transmitted light via permittivity tuning of indium tin oxide. *Nanophotonics,* 2019, vol. 8, 415
- **KAMALI et al.** A review of dielectric optical metasurfaces for wavefront control. *Nanophotonics,* 2018, vol. 7 (6), 1041

- **JI et al.** Adaptive optics via pupil segmentation for high-resolution imaging in biological tissues. *Nat Methods,* 2010, vol. 7, 141-147
- **GOLSALVES.** Phase retrieval and diversity in adaptive optics. *Optical Engineering,* 1982, vol. 21 (5), 215829
- **GONSALVES et al.** Phase retrieval and diversity in adaptive optics. *Optical Engineering, Soc. Of Photo-Optical Instrumentation Engineers,* 1982, vol. 21 (5), 829-832